**Europäisches Patentamt**

**European Patent Office**

**Office européen des brevets**

(11) Veröffentlichungsnummer: **0 129 172**
**A1**

(12) ## EUROPÄISCHE PATENTANMELDUNG

(21) Anmeldenummer: **84106607.9**

(22) Anmeldetag: **08.06.84**

(51) Int. Cl.³: **F 01 N 3/20**

(30) Priorität: **11.06.83 DE 3321232**

(43) Veröffentlichungstag der Anmeldung:
**27.12.84 Patentblatt 84/52**

(84) Benannte Vertragsstaaten:
**DE FR GB IT**

(71) Anmelder: **AUDI NSU AUTO UNION
AKTIENGESELLSCHAFT
Felix-Wankelstrasse
D-7107 Neckarsulm(DE)**

(72) Erfinder: **le Vrang, Klaus
Schulstrasse 11
D-8071 Eitensheim(DE)**

(74) Vertreter: **Le Vrang, Klaus
AUDI NSU AUTO UNION Aktiengesellschaft Postfach
220 Patentabteilung
D-8070 Ingolstadt(DE)**

(54) **Verfahren zum Betreiben einer Abgasanlage.**

(57) Es wird ein Kraftfahrzeug mit einem Abgasauslaßsystem vorgeschlagen, das zur Entgiftung der Abgase einen katalytischen Konverter verwendet. Bei Betreiben des Kraftfahrzeuges mit belifreiem Kraftstoff wird das Abgas über den Konverter geführt, während bei Verwendung von bleihaltigem Kraftstoff der Konverter durch einen Bypass umgangen wird. Die Umschaltung zwischen katalytischer Abgasnachbehandlung einerseits und der Umgehung des Katalysators andererseits kann in Abhängigkeit von einer Meßstelle oder Sonde erfolgen, die auf den Bleigehalt des Kraftstoffs anspricht.

EP 0 129 172 A1

Croydon Printing Company Ltd

AUDI NSU AUTO UNION
Aktiengesellschaft

## Verfahren zum Betreiben einer Abgasanlage

Die Erfindung bezieht sich auf ein Verfahren zum Betreiben einer Abgasanlage gemäß dem Oberbegriff des Anspruchs 1.

Heutige Umweltprobleme, zu denen die Emissionen der Kraftfahrzeuge beitragen, haben nach der Forderung geführt, die Abgase von Kraftfahrzeugen zu entgiften. Eine Möglichkeit der Abgasentgiftung ist eine katalytische Konvertierung, wie sie beispielsweise in den USA und Japan gesetzlich vorgeschrieben sind. Diese Lösung ließ sich jedoch bislang auf europäische Verhältnisse nicht übertragen, da die Katalysatoren zu ihrer Funktionsfähigkeit bleifreies Benzin erfordern. Eine Lösung wird deshalb nur in der Möglichkeit gesehen, im gesamten europäischen Raum gleichzeitig bleifreien Kraftstoff anzubieten, um die Katalysatoren nicht durch Blei zu vergiften.

Aufgabe der Erfindung ist es, eine Abgasanlage für Kraftfahrzeuge zu schaffen, die wahlweise mit bleifreiem und bleihaltigem Kraftstoff betrieben werden können, wobei der Katalysator bei bleifreiem Kraftstoff wirksam ist, bei bleihaltigem Kraftstoff jedoch nicht zerstört wird.

Die Aufgabe wird gelöst durch die Merkmale des Anspruchs 1.

Es sind zwar im Stand der Technik bereits Bypasslösungen für Katalysatoren beschrieben. Die DE-AS 23 59 533 beschreibt eine Abgasreinigungsanlage, die im Vollastbetrieb den katalytischen Umformer durch einen Bypass außer Kraft setzt, da die Entgiftung vorwiegend im Stadtbereich bei Teillastbetrieb benötigt wird. Die DE-AS 24 41 941 beschreibt eine Umgehungsleitung des Katalysators, die bei zu hohen Temperaturen aktiviert wird, um eine Zerstörung des Katalysators zu verhindern. Dieser Stand der Technik jedoch bietet keine Lösung für das der Erfindung zugrundeliegende Problem, nämlich die Möglichkeit anzubieten, ein Kraftfahrzeug sowohl mit

bleifreiem als auch mit verbleitem Kraftstoff zu betreiben.

Erfindungsgemäß wird also vorgesehen, im Normalzustand das Fahrzeug mit bleifreiem Kraftstoff zu betreiben, wobei der Katalysator dafür sorgt, daß die Schadstoffemissionen auf das geringstmögliche Maß herabgesetzt werden. Sollte jedoch, insbesondere im grenzüberschreitenden Verkehr, die Notwendigkeit bestehen, auf verbleiten Kraftstoff zurückzugreifen, da bleifreier Kraftstoff nicht erhältlich ist. wird der Durchfluß durch den Katalysator gesperrt, so daß der Katalysator nicht mit den bleihaltigen Auspuffgasen in Berührung kommt.

Vorteilhafte Ausgestaltungen sind in den Unteransprüchen beschrieben:

Anspruch 2 beschreibt eine Sperrvorrichtung für den Katalysator zum Umleiten der Gase, die willkürlich von Hand betätigbar ist. Vorteil dieser Lösung ist, daß die Notwendigkeit der Identifikation des Bleis im Kraftstoff entfällt, andererseits jedoch besteht dabei natürlich die Gefahr des Mißbrauches, da bekanntermaßen die Umgehung des Katalysators höhere Leistung und/oder geringeren Verbrauch ermöglicht. Als Lösungsmöglichkeit, solchen Mißbräuchen zu begegnen, böte sie hier beispielsweise eine Versiegelung der Umgehungsleitung an, die nur z.B. im grenzüberschreitenden Verkehr geöffnet wird.

Vorteilhafter ist sicherlich eine Anordnung nach Anspruch 3, die eine automatische Umschaltung abhängig von dem Wert, den eine Meßstelle liefert, vorsieht. Die Meßstelle bestimmt den Bleigehalt, und bei Vorliegen eines Signals, daß das Vorhandensein von Blei anzeigt, wird der den Katalysator durchströmende Abgaszweig gesperrt und die Umgehungsleitung geöffnet.

Dabei bietet sich an, daß die Meßstelle im Abgaskanal angeordnet ist. Dabei bieten sich verschiedene Möglichkeit, den Bleigehalt der Abgase zu erfassen; eine Möglichkeit wäre z.B., auf einen Sensor auf spektroskopischer Basis zurückzugreifen, der die charakteristischen Spektrallinien des chemischen Elementes Blei nachweist.

Anspruch 5 beschreibt die Anordnung der Meßstelle, wenn das Vorhandensein von Blei noch im flüssigen Kraftstoff festgestellt werden soll.

Eine Möglichkeit, in diesem Zustand des Kraftstoffes das Vorhandensein von Blei zu erfassen,ist, sich die Tatsache zu Nutze zu machen, daß durch Bestimmung des Gesetzgebers der verbleite Kraftstoff eingefärbt werden muß, um auf diese Weise Mißbräuche des Kraftstoffes, der das Zellgift Blei enthält, zu vermeiden. Die Meßstelle kann in bekannter Weise die Lichtdurchlässigkeit, beispielsweise mit einer Lichtquelle und einem Fototransistor, messen und somit differenzieren, ob farbloses Benzin verwendet wird, das dementsprechend nicht verbleit ist, oder ob eingefärbtes, bleihaltiges Benzin verwendet wird. Geeigneterweise wird man eine derartige Meßstelle in der Zuführungsleitung zur Kraftstoffpumpe einsetzen, es sind jedoch auch Anbringugnsorte z.B. in der Kraftstoffpumpe selbst, im Tank oder in der Nähe der Einspritzventile denkbar.

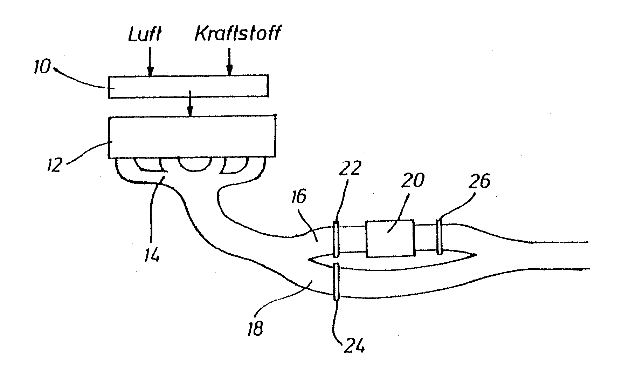

Die Figur zeigt schematisch den Aufbau der Erfindung.

Einer Aufbereitungseinheit 10 werden getrennt Luft und Kraftstoff zugeführt, diese Aufbereitungseinheit 10 gibt ein Benzin/Luftgemisch an den Motor 12 ab. Übliche Formen für die Aufbereitungseinheit 10 sind Einspritzanlagen oder Vergaser. Die Auslaßventile des Motors 12 münden in den Auspuffkrümmer 14, der die Abgase ins Freie führt. Im weiteren Verlauf der Abgasanlage teilt sich das Rohr für die Abgase in einen Zweig 16 und einen Zweig 18. Der Zweig 16 besitzt einen Katalysator 20, während der Zweig 18 keinen Katalysator enthält. Es sind Absperrvorrichtungen 22, 24 und 26 vorgesehen, wobei die Absperrvorrichtungen 22 und 26 den Katalysatorzweig 16 vor und hinter dem Katalysator 20 versperren, um keine Abgase durch den Katalysator 20 zu führen. Diese Absperrungen 22 und 26 werden geschlossen, wenn bleihaltige Auspuffgase aus dem Motor 12 treten, dementsprechend muß natürlich die Absperrvorrichtung 24 geöffnet werden, um den Austritt der Auspuffgase ins Freie zu ermöglichen.

Wird jedoch bleifreier Kraftstoff verwendet, so wird die Absperrvorrichtung 24 geschlossen, um die Umgehung des Katalysators 20
durch den Bypass 18 zu verhindern, so daß die Auspuffgase aus
dem Ansaugkrümmer 14 über den Katalysatorzweig 16 durch die nunmehr geöffnete Absperrvorrichtung 22 zum Katalysator 20 geführt
wird und dort katalytisch konvertiert wird. Nach der Konvertierung
strömen die auf diese Weise schadstoffarm gehaltenen Abgase durch
die geöffnete Absperrung 26 und gelangen ins Freie.

Die Zusammenführung von Bypass und Katalysatorzweig kann natürlich
entfallen, wenn die Auslaßöffnungen der beiden Zweige jeweils
getrennt ins Freie führen. In diesem Fall ist auch die Absperrvorrichtung 26 hinter dem Katalysator überflüssig.

AUDI NSU AUTO UNION
Aktiengesellschaft

P a t e n t a n s p r ü c h e

1. Verfahren zum Betreiben einer Abgasanlage für fremdgezündete Brennkraftmaschinen mit einer Abgassammelleitung, in der ein katalytischer Konverter zur Reduzierung des Schadstoffgehaltes der Auspuffgase angeordnet ist, einem Bypass zur Umgehung des Katalysators, und einer Vorrichtung zum Schließen entweder des Katalysatorzweiges oder aber des Bypasses, d a d u r c h   g e - k e n n z e i c h n e t ,   daß die Vorrichtung (22, 24, 26) zum Schließen abhängig vom Bleigehalt des zum Betreiben der Brennkraftmaschine verwendeten Kraftstoffes betätigt wird.

2. Verfahren nach Anspruch 1, d a d u r c h   g e k e n n - z e i c h n e t ,   daß die Vorrichtung (22, 24, 26) zum Schließen willkürlich betätigbar ist.

3. Verfahren nach Anspruch 1, d a d u r c h   g e k e n n - z e i c h n e t ,   daß die Vorrichtung (22, 24, 26) zum Schließen durch eine Meßstelle angesteuert ist, die auf den Bleigehalt anspricht und bei Vorliegen von verbleitem Kraftstoff den Katalysatorzweig sperrt.

4. Verfahren nach Anspruch 3, d a d u r c h   g e k e n n - z e i c h n e t ,   daß die Meßstelle im Abgaskanal angeordnet ist.

5. Verfahren nach Anspruch 3, d a d u r c h   g e k e n n - z e i c h n e t ,   daß die Meßstelle stromaufwärts der Aufbereitungsstelle des Benzin-/Luftgemisches liegt.

- 2 -

0129172

6. Verfahren nach Anspruch 5, d a d u r c h   g e k e n n -
   z e i c h n e t ,   daß die Meßstelle eine Einrichtung zum Erfassen der Lichtdurchlässigkeit des Kraftstoffes aufweist.

Luft  Kraftstoff

10
12
14
16
22
20
26
18
24

0129172

## EINSCHLÄGIGE DOKUMENTE

| Kategorie | Kennzeichnung des Dokuments mit Angabe. soweit erforderlich, der maßgeblichen Teile | Betrifft Anspruch | KLASSIFIKATION DER ANMELDUNG (Int. Cl. 3) |
|---|---|---|---|
| Y | US-A-3 086 839 (H.S. BLOCH) <br> * Spalte 2, Zeilen 5-9; Figuren * | 1,2 | F 01 N 3/20 |
| | --- | | |
| Y | GB-A-2 041 239 (USS ENGINEERS AND CONSULTANTS INC.) <br> * Anspruch 1 * | 1,2 | |
| | --- | | |
| A | PRODUCT ENGINEERING, Band 35, Nr. 6, 16. März 1964, Seiten 63-64, McGraw-Hill, New York, US; "Mufflers" <br> * Figuren; Seite 64; Seite 63, rechte Spalte, Abschnitt 4 * | | |
| | --- | | |
| A | US-A-3 972 184 (J.A. WARREN) <br> * Spalte 1, Zeilen 19-25 * | | RECHERCHIERTE SACHGEBIETE (Int. Cl. 3) |
| | ----- | | F 01 N 3/00 |

Der vorliegende Recherchenbericht wurde für alle Patentansprüche erstellt.

| Recherchenort <br> DEN HAAG | Abschlußdatum der Recherche <br> 17-09-1984 | Prüfer <br> FRIDEN C.M. |
|---|---|---|